Europäisches Patentamt

European Patent Office

Office européen des brevets

(19)

(11) Publication number: **0 348 196**
**A1**

# EUROPEAN PATENT APPLICATION

(12)

(21) Application number: 89306305.7

(22) Date of filing: 22.06.89

(51) Int. Cl.4: **A 23 L 1/308**
A 23 L 1/30, A 23 D 5/00,
A 23 L 1/307, A 23 L 1/164,
A 23 L 1/18

(30) Priority: 24.06.88 US 211208

(43) Date of publication of application:
27.12.89 Bulletin 89/52

(84) Designated Contracting States:
AT BE CH DE ES FR GB GR IT LI LU NL SE

(71) Applicant: THE PROCTER & GAMBLE COMPANY
One Procter & Gamble Plaza
Cincinnati Ohio 45202 (US)

(72) Inventor: Kayes, Joseph E.
785 Woodfield Drive
Cincinnati Ohio 45231 (US)

Savicki, Karl W.
3950 Glenmore Avenue
Cheviot Ohio 45211 (US)

(74) Representative: Gibson, Tony Nicholas et al
Procter & Gamble (NTC) Limited Whitley Road
Longbenton Newcastle upon Tyne NE12 9TS (GB)

(54) Reduced calorie granola bars.

(57) The present invention relates to food products such as granola bars, popcorn balls, nut clusters, and the like, products in which food pieces are held together by a binder. The binder contains a reduced calorie fat substitute, preferably sucrose fatty acid polyesters. A highly preferred granola bar according to the invention comprises from about 40% to about 65% by weight granola and from about 35% to about 60% by weight binder, where the binder comprises from about 10% to about 33% sucrose polyester.

EP 0 348 196 A1

**Description**

## REDUCED CALORIE GRANOLA BARS

### TECHNICAL FIELD

The present invention relates to the field of food products such as granola bars, popcorn balls, nut clusters, and the like, products in which food pieces are held together by a binder. More specifically, the invention relates to foods such as granola bars in which the binder is made with a reduced calorie fat substitute.

### BACKGROUND OF THE INVENTION

Granola products have become increasingly popular as part of a nationwide trend toward more health-oriented foods. They provide a high energy source and contain nutritious ingredients such as grains, seeds, nuts and fruits. Similar food products such as popcorn balls, nut clusters, fruit bars, and rice crisp bars also enjoy wide popularity. These products comprise food pieces of various types and a binder generally made with vegetable oil.

Unfortunately, the consumption of triglyceride fats (vegetable oils and animal fats) has been linked to various health problems. One of the most common metabolic problems among people today is obesity, primarily caused by ingestion of a greater number of calories than are expended. Triglyceride fat is the most concentrated form of calories in the diet, with each gram of fat supplying approximately 9 calories.

The National Institutes of Health Consensus Development Conference, "Lowering Blood Cholesterol to Prevent Heart Disease," JAMA, Vol. 253, No. 14, pp. 2080-2086 (1985), concluded that elevation of blood cholesterol levels is a major cause of coronary artery disease, and recommended a reduction in the amount of fat eaten in order to reduce blood serum cholesterol levels.

In view of the health concerns associated with triglyceride fats, there is a need for a way to make granola bars and like products in which the amount of triglyceride fat is reduced.

U.S. Patent 3,600,186 of Mattson et al., issued Aug. 17, 1971, discloses low calorie food compositions made by replacing at least a portion of the triglyceride fat with a sugar or sugar alcohol fatty acid ester. Foods disclosed are frying oils, salad oils, plastic shortening, cakes, breads, prepared culinary mixes (e.g., for cakes and icings), mayonnaise, and margarine.

U.S. Patent 4,461,782 of Robbins et al., issued July 24, 1984, discloses baked products containing 12-60% liquid polyol polyester and 25-85% microcrystalline cellulose and flour. Examples given are breads, cakes and wafers.

U.S. Patent 4,034,083 of Mattson, issued July 5, 1977, discloses vitamin-fortified polyol polyesters used in foods or pharmaceutical compositions, and U.S. Patent 4,005,195 of Jandacek, issued Jan. 25, 1977, discloses liquid polyol polyesters combined with anti-anal leakage agents. The polyesters are said to be useful as a partial or complete replacement for normal triglyceride fats in a salad or cooking oil; in plastic shortenings for use in frying, cake making or bread making; or in mayonnaise, margarine, or dairy products.

Fallat et al., "Short Term Study of Sucrose Polyester a Nonabsorbable Fat-Like Material as a Dietary Agent for Lowering Plasma Cholesterol," The American Journal of Clinical Nutrition 29, pp. 1204-1215 (Nov. 1976), discloses a study in which the efficacy of sucrose polyester as a cholesterol-lowering agent was assessed. The polyester was used as a fat component in shortening, margarine, baked and sauteed foods, sauces, frostings and candies.

None of these references discloses granola bars or like products containing reduced calorie fats.

It is, therefore, an object of the present invention to provide food products such as granola bars in which at least a portion of the triglyceride fat in the binder is replaced by a reduced calorie fat.

It is another object of the present invention to provide reduced calorie fat-containing granola bars and like products that taste at least as good as the triglyceride fat-containing products.

These and other objects of the invention will become evident from the disclosures herein.

All parts, percentages, and ratios used herein are by weight unless otherwise indicated.

### SUMMARY OF THE INVENTION

The present invention relates to food products such as granola bars, popcorn balls, nut clusters, and the like, products in which food pieces are held together by a binder. The binder contains a reduced calorie fat substitute, preferably sucrose fatty acid polyesters. A highly preferred granola bar according to the invention comprises from about 40% to about 65% by weight granola and from about 35% to about 60% by weight binder, where the binder comprises from about 5% to about 33% sucrose polyester.

## DETAILED DESCRIPTION OF THE INVENTION

This invention relates to food products in which various kinds of food pieces are held together by a binder. A typical example is a granola bar in which the granola pieces are held together by a binder containing a triglyceride fat. In the present invention the binder comprises from about 5% to about 100% reduced calorie fat substitute. It has been discovered that granola bars and such foods can be made that are reduced in calories with at least equal taste compared to products in which the binder contains only triglyceride fat.

Food Products of the Invention

A food product according to the present invention comprises edible food pieces held together by a binder, wherein the binder comprises from about 5% to about 100% reduced calorie fat substitute. Examples of such food products include granola bars, granola clusters, and other similar granola products. These products comprise pieces of granola held together by a binder of some sort. Musli bars or clusters are made from granola in which the grain is not toasted.

Other examples include various kinds of popcorn balls or popcorn clusters, in which popcorn pieces are held together by a binder. There are a variety of different kinds of popcorn balls and clusters in addition to the standard type comprising popcorn and a binder. For example, crackerjack is a mixture of popcorn and peanuts bound together. Popcorn chop suey is a mixture of popcorn, coconut and peanuts. Nut popcorn balls are a mixture of popcorn and nuts, for example walnuts, pecans or hickory nuts. Cereal popcorn balls are a mixture of popcorn and puffed cereal, and raisin popcorn balls are a mixture of popcorn and raisins. The popcorn balls or clusters can be flavored or covered, for example by chocolate, caramel glaze, molasses or candy coating.

Nut clusters are also included within the food products of the present invention. A wide variety of nuts can be used in these products, for example peanuts, almonds, pecans, walnuts, hazelnuts, pine nuts, Brazils, cashews, chestnuts, filberts, hickory nuts, and pistacchios. The nuts can be raw, roasted, blanched, fried or browned, and chopped, ground, sliced or shredded.

Fruit bars and fruit clusters are another example of food products within the present invention. These products are made with pieces of fruit, usually dried fruit, held together by a binder. The dried fruits most commonly used are raisins, dates, prunes, apricots, and apples, usually in chopped or sliced form. Other possible fruits include lemons, limes, oranges, cherries, pears, peaches, bananas, pineapple, strawberries, figs, grapes, and grapefruit.

Also within the scope of the present invention are fruit and nut bars or clusters, which contain a mixture of both fruit and nuts, for example walnuts and cherries.

Another example of foods within the present invention are clusters or bars made from puffed rice or other puffed cereal grains, for example "Rice Krispies" bars.

Any combination of the above ingredients can be used, and the foods can be in the form of bars, rolls, balls, clusters, squares, sticks or the like. The products can be in soft or hard form, chewy or crunchy. Additionally, the products can be covered with various kinds of coatings, for example chocolate, glaze, candy, or yogurt.

The products can also contain numerous other complimentary ingredients in addition to the food pieces, binder, and any coating. For example, the present products, particularly granola bars, will often contain one or more of the following ingredients: peanut butter or other nut butters, coconut, caramel, chocolate, fudge, graham cracker crumbs, honey, brown sugar, sucrose or other sugars, salt, flavors such as vanillin, spices (e.g., cinnamon, mace, nutmeg, anise, allspice, lemon rinds, coriander, ginger, cloves, or fennel), seeds, flavor chips (e.g., chocolate, butterscotch, peanut butter), soy grits, breadcrumbs, baking soda, baking powder, malt, nonfat dry milk, leavenings, emulsifiers, stabilizers and preservatives.

The food products of the invention can be baked or unbaked. If baking is not used, typically the ingredients are heated enough to allow mixing, then formed and cooled. The invention is not limited by the processing method.

Granola

Granola is generally defined as a mixture of toasted grains, nuts, seeds, and usually dried fruits. Musli is usually defined the same as granola but containing untoasted grains. Any kind of granola or musli can be used in the present invention.

The typical grain used in granola is rolled oats, which are produced by passing oats through a series of roller mills. Other grains useful in granola include, but are not limited to, cornmeal, corn bran, wheat germ, wheat bran, whole wheat, whole oats, oatmeal, wheat flakes, rye flakes, bran flakes, buckwheat groats, and rice. The grains can be whole, bran, flaked, rolled, or processed in another manner.

The nuts used most often in granola are peanuts, almonds, pecans, walnuts, hazelnuts, and pine nuts, usually in chopped or sliced form. The seeds used in granola are generally sesame seeds, carraway seeds, poppy seeds, sunflower seeds, or pumpkin seeds, although other seeds can be used.

The dried fruits most commonly found in granola are raisins, dates, prunes, apricots, and apples, usually in chopped or sliced form, and shredded coconut.

## The Binder

The food pieces that make up the food products of the present invention are held together by a binder. Vegetable oil or sometimes animal fat generally comprises a large part of ordinary binders. In the present invention, at least a portion of this triglyceride fat is replaced by a reduced calorie fat substitute, described in detail below. Replacement of triglyceride fat allows a reduction in calories, while at the same time the good taste of the food products is maintained.

In addition to the triglyceride fat and reduced calorie fat substitute, the binder can comprise a variety of other ingredients including, but not limited to, the following: sucrose and other sugars, flour, honey, molasses, corn syrup, invert syrup, maple syrup, sorbitol, glycerine, lecithin, water or other fluids, and eggs. The most suitable triglyceride fats are vegetable oils such as corn oil, cottonseed oil, soybean oil, palm oil, rapeseed oil, and peanut oil. The vegetable oils can be partially or fully hydrogenated and can contain stabilizers and emulsifiers, e.g., mono- and diglycerides. The oils can be in the form of shortening or margarine.

## Composition Ranges for the Food Products of the Invention

As discussed hereinabove, the food products of the present invention comprise edible food pieces held together by a binder, wherein the binder comprises from about 5% to about 100% by weight reduced calorie fat substitute. Preferably, the binder comprises from about 5% to about 50% fat substitute, more preferably from about 5% to about 33%, and most preferably from about 15% to about 33%.

Granola bars of the present invention preferably comprise from about 25% to about 70% by weight binder and from about 30% to about 75% by weight granola, more preferably from about 35% to about 60% binder and from about 40% to about 65% granola, and most preferably from about 45% to about 50% binder and from about 50% to about 55% granola.

It is also preferred that the granola bars comprise from about 5% to about 33% by weight reduced calorie fat substitute, more preferably from about 5% to about 25%, and most preferably from about 10% to about 20%.

Other food products of the present invention will vary in the amounts of binder and dry food pieces used, depending on the type of food.

## Reduced Calorie Fat Substitutes

The reduced calorie fat substitutes used in this invention are edible materials which can replace conventional triglyceride fats. These fat substitutes provide the benefits of triglycerides such as consistency, lubricity and flavor, yet do not add as many calories because they are nondigestible, partially digestible, or are lower in net caloric efficiency compared to triglycerides.

Many classes of reduced calorie fat substitutes, or mixtures thereof, are suitable for use in the present invention. Examples of such materials are: fatty alcohol esters of polycarboxylic acids (U.S. Patent 4,508,746 to Hamm, assigned to CPC International, Inc., issued April 2, 1985); fatty polyethers of polyglycerol (U.S. Patent 3,932,532 of Hunter et al., assigned to ICI United States, Inc., issued January 13, 1976) (food use disclosed in German Patent 207,070, issued February 15, 1984)); ethers and ether-esters of polyols containing the neopentyl moiety (U.S. Patent 2,962,419 of Minich, issued November 29, 1960); fatty alcohol diesters of dicarboxylic acids such as malonic and succinic acid (U.S. Patent 4,582,927 of Fulcher, assigned to Frito-Lay, Inc., issued April 15, 1986); triglyceride esters of alpha branched chain-alkyl carboxylic acids (U.S. Patent 3,579,548 of Whyte, assigned to The Procter & Gamble Co., issued May 18, 1971); fatty acid diglyceride, diesters of dibasic acids (U.S. Patent 2,874,175 to Feuge et al.); polyorganosiloxanes (European Patent Application 205,273 to Frye); alpha-acylated glycerides (U.S. Patent 4,582,715 to Volpenhein); and sugar and sugar alcohol fatty acid polyesters (U.S. Patent 3,600,186 of Mattson and Volpenhein, assigned to Procter & Gamble, issued August 17, 1971), all incorporated herein by reference. Also suitable for use as a fat substitute in the present invention are medium chain triglycerides, highly esterified polyglycerol esters, acetin fats, plant sterol esters, N-Oil, polyoxyethylene esters, jojoba esters, mono/diglycerides of fatty acids, mono/diglycerides of short-chain dibasic acids, silicone oils/siloxanes (see, e.g., European Patent Application 205,273 of Dow Corp., incorporated by reference herein), and "Olestrin" (Reach Assoc., Inc.), made by particle engineering dextrins and adding them to a fat substitute such as polyol fatty acid polyesters.

However, for reasons of cost efficiency, consumer acceptability, and assurance of inherent safety, the preferred class of reduced calorie fat substitute is polyol fatty acid polyesters which comprise sugar fatty acid polyesters, sugar alcohol fatty acid polyesters, glycerol fatty acid polyesters, polyglycerol fatty acid polyesters, and mixtures thereof. More preferably, the fat substitute is selected from the group consisting of sugar fatty acid polyesters and sugar alcohol fatty acid polyesters, and mixtures thereof, the sugars and sugar alcohols containing from 4 to 8 hydroxyl groups.

Sugar or sugar alcohol fatty acid polyesters comprise sugars or sugar alcohols, and fatty acids. The term "sugar" is used herein in its conventional sense as generic to mono-and disaccharides. The term "sugar alcohol" is also used in its conventional sense as generic to the reduction product of sugars wherein the aldehyde or ketone group has been reduced to an alcohol. The fatty acid ester compounds are prepared by reacting a monosaccharide, disaccharide or sugar alcohol with fatty acids as discussed below.

Examples of suitable monosaccharides are those containing 4 hydroxyl groups such as xylose, arabinose, and ribose; the sugar alcohol derived from xylose, i.e., xylitol, is also suitable. The monosaccharide erythrose is not suitable for the practice of this invention since it only contains 3 hydroxyl groups; however, the sugar alcohol derived from erythrose, i.e. erythritol, contains 4 hydroxyl groups and is thus suitable. Among 5 hydroxyl-containing monosaccharides that are suitable for use herein are glucose, mannose, galactose, fructose, and sorbose. A sugar alcohol derived from sucrose, glucose, or sorbose, e.g., sorbitol, contains 6 hydroxyl groups and is also suitable as the alcohol moiety of the fatty acid ester compounds. Examples of suitable disaccharides are maltose, lactose, and sucrose, all of which contain eight hydroxyl groups.

Preferred polyols for preparing the polyesters for use in the present invention are selected from the group consisting of erythritol, xylitol, sorbitol, glucose and sucrose. Sucrose is especially preferred.

The polyol starting material having at least four hydroxyl groups must be esterified on at least four of the -OH groups with a fatty acid containing from about 8 to about 22 carbon atoms, and preferably from about 14 to about 18 carbon atoms. Examples of such fatty acids include caprylic, capric, lauric, myristic, myristoleic, palmitic, palmitoleic, stearic, oleic, ricinoleic, linoleic, linolenic, eleostearic, arachidic, arachidonic, behenic, and erucic acid. The fatty acids can be derived from naturally occurring or synthetic fatty acids; they can be saturated or unsaturated, including positional or geometrical isomers.

The polyol fatty acid polyesters useful in this invention must contain at least four fatty acid ester groups. Polyol fatty acid polyester compounds that contain three or less fatty acid ester groups are digested in and the products of digestion are absorbed from the intestinal tract much in the manner of ordinary triglyceride fats, whereas the polyol fatty acid polyester compounds that contain four or more fatty acid ester groups are substantially non-digestible and consequently non-absorbable by the human body. It is not necessary that all of the hydroxyl groups of the polyol be esterified with fatty acid, but it is preferable that the polyol contain no more than three unesterified hydroxyl groups, and more preferable that it contain no more than two unesterified hydroxyl groups. Most preferably, substantially all of the hydroxyl groups of the polyol are esterified with fatty acid, i.e., the compound is substantially completely esterified. The fatty acids esterified to the polyol molecule can be the same or mixed.

The polyol fatty acid polyesters of the present invention can be liquid, solid, semisolid, or mixtures thereof. The liquid polyol fatty acid polyesters are liquids at body temperature, i.e., have a melting point of about 37°C (98.6°) or below. In general, liquid esters are those which are made from unsaturated fatty acids, whereas solid esters are substantially saturated. In order to provide liquid polyol fatty acid polyesters, generally at least about half of the fatty acids incorporated into an ester molecule must be unsaturated. Oleic and linoleic acids, and mixtures thereof, are especially preferred. The following are non-limiting examples of specific liquid polyol fatty acid polyesters containing at least four fatty acid ester groups suitable for use in the present invention: glucose tetraoleate, the glucose tetraesters of soybean oil fatty acids (unsaturated), the mannose tetraesters of mixed soybean oil fatty acids, the galactose tetraesters of oleic acid, the arabinose tetraesters of linoleic acid, xylose tetralinoleate, galactose pentaoleate, sorbitol tetraoleate, the sorbitol hexaesters of unsaturated soybean oil fatty acids, xylitol pentaoleate, sucrose tetraoleate, sucrose pentaoleate, sucrose hexaoleate, sucrose heptaoleate, sucrose octaoleate, and mixtures thereof. As noted above, highly preferred polyol fatty acid esters are those wherein the fatty acids contain from about 14 to about 18 carbon atoms.

The solid polyol fatty acid polyesters are solids at body temperature, i.e., have a melting point of above about 37°C (98.6°F). Non-limiting examples of specific solid polyol fatty acid esters include sucrose octastearate, sucrose octapalmitate, sucrose heptastearate, xylitol pentastearate, galactose pentapalmitate, and like, saturated polyol polyesters having at least four hydroxyl groups esterified with $C_{10}$-$C_{22}$ saturated fatty acids.

It is known that liquid polyol fatty acid polyesters can cause an undesired anal leakage effect. U.S. Patent 4,005,195 of Jandacek and U.S. Patent 4,005,196 of Jandacek et al., both incorporated by reference herein, disclose a method of avoiding this problem of the addition of anti-anal leakage agents to the liquid polyesters.

Therefore, a preferred embodiment of the present invention is a food product containing a liquid polyol polyester and additionally comprising sufficient anti-anal leakage agent to prevent leakage of the polyol polyester through the anal sphincter. Preferably the food product comprises at least about 5% anti-anal leakage agent by weight of the polyol polyester, more preferably at least about 10%, more preferably at least about 20%, and most preferably from about 20% to about 50%. A preferred anti-anal leakage agent is a solid polyol fatty acid polyester.

Polyol fatty acid polyesters having a high liquid/solid stability have been found to be highly resistant to anal leakage. By "liquid/solid stability" is meant that the liquid portion of the polyesters does not readily separate from the solid portion. The polyol polyesters preferably have a liquid/solid stability of at least about 50%, more preferably at least about 60%, more preferably at least about 70%, and most preferably at least about 90%. A minimum solids content in the polyol fatty acid polyesters is also preferred for anti-anal leakage control. The polyesters preferably have a solid fat content of at least about 5% at 100°F (37.8°C), more preferably at least about 10%.

These liquid/solid stability and solid fat content properties are preferred for either a physical mixture of different solid and liquid polyol fatty acid polyesters, or a single polyol fatty acid polyester that is partially liquid and partially solid at 100°F (37.8°C).

Also preferred for use in the present invention are polyol fatty acid polyesters, particularly sugar or sugar alcohol polyesters or mixtures thereof, that have a high liquid/solid stability at relatively low solids levels. These polyesters are preferred because the low solids levels give them a less waxy taste. In particular, the preferred polyesters have the following properties at 100°F (37.8°C): (a) a liquid/solid stability of at least about 50%, preferably at least about 60%; and (b) a solid fat content (SFC) of not more than about 30%. The solid fat content is preferably between about 5% and about 25%, and more preferably between about 10% and about 20%. It is also preferred that these polyol polyesters have a viscosity of at least about 1 poise after 10 minutes of steady shear at a shear rate of 10 seconds⁻¹, more preferably at least about 5 poise, and most preferably at least about 15 poise. The preferred upper limit of the viscosity of these polyesters is about 10,000 poise after 10 minutes of shear at a shear rate of 10 seconds⁻¹, more preferably about 1,000 poise.

Sucrose fatty acid polyesters are highly preferred polyol polyesters for use as the present reduced calorie fat substitute. The sucrose fatty acid polyesters preferably have the majority of their hydroxyl groups esterified with fatty acids. Preferably at least about 85%, and most preferably at least about 95%, of the sucrose fatty acid esters are selected from the group consisting of octaesters, heptaesters and hexaesters, and mixtures thereof. Preferably, no more than about 35% of the esters are hexaesters or heptaesters, and at least about 60% of the esters are octaesters. Most preferably, at least about 70% of the esters are octaesters. It is also most preferred that the polyesters have a total content of penta- and lower esters of not more than about 3%.

The sucrose fatty acid esters are preferably esterified with particular kinds of fatty acids. Preferably, at least about 80%, and most preferably at least about 90%, of the fatty acids are selected from the group consisting of mixtures of palmitic, stearic, oleic, linoleic, and behenic acids. It is also most preferred that at least about 80% of the fatty acids are selected from the group consisting of mixtures of C16 to C18 fatty acids.

There are possible advantages associated with the use of sucrose fatty acid polyesters as a replacement for triglyceride oils in the present food products, particularly use of the sucrose polyesters having high viscosity and liquid/solid stability at relatively low solids levels. For example, granola bars made with these sucrose polyesters may be easier to handle during processing in that they are easier to roll and less sticky. The high viscosity at low solids levels also allows the production of food products that are firm yet have a good, non-waxy taste. In general, it is believed that sucrose polyesters may make a better binder than triglyceride oils because the polyesters are comprised of bulkier, less free-flowing molecules. It has also been noted that sucrose polyesters can act to enhance the flavors of certain foods, e.g., the flavor of pecans in granola bars, and dairy flavor in other foods.

The polyol fatty acid polyesters suitable for use herein can be prepared by a variety of methods known to those skilled in the art. These methods include: transesterification of the polyol with methyl, ethyl or glycerol fatty acid esters using a variety of catalysts; acylation of the polyol with a fatty acid chloride; acylation of the polyol with a fatty acid anhydride; and acylation of the polyol with a fatty acid, per se. As an example, the preparation of polyol fatty acid polyesters is described in U.S. Patent Nos. 2,831,854, 3,600,186, 3,963,699, 4,517,360 and 4,518,772 (all herein incorporated by reference).

Preferred Method for Preparing Sucrose Fatty Acid Polyesters

Methyl esters of a fully hydrogenated (Iodine Value about 1) soy oil (90.8 kg), and 293 kg. of a 6.8 wt. percent solution of potassium hydroxide in methanol are mixed in a stainless steel batch reactor. This mixture is then heated to about 145°F (63°C) with agitation for 1 to 3 hours at atmospheric pressure. During this time, a portion of the methyl esters are saponified to form soap.

An additional 592.5 kg of methyl esters of a fully hydrogenated soy oil (Iodine Value about 1) and a partially hydrogenated soy oil (Iodine Value about 107), blended in a 57:43 ratio, is then added to the soap mixture. Granular sucrose (136.2 kg.) is added to the soap/ester mixture to give a 5:1 molar ratio of ester to sucrose. Potassium carbonate is then added to the mixture (approx. 0.5 wt. percent of the reaction mix) to catalyze the transesterification. This mixture is agitated and slowly heated at atmospheric pressure until the temperature reaches about 275°F (135°C). This is to remove the methanol. A vacuum is then pulled and the mixture agitated for up to 4 hours to form the mono-, di- and trisucrose esters. Small quantities of tetra- and pentaesters are also formed during this stage. Additional methyl ester (950.7 kg) which has been preheated to 275°F (135°C) is added to bring and maintain the molar ratio of the esters to sucrose to 12:1. Additional potassium carbonate is then added to the mixture (approx. 0.5 wt. percent of the initial reaction mix). When the reaction conditions stabilize at 275°F (135°C), a nitrogen sparge is used to improve agitation and promote methanol stripping. This second reaction stage lasts approximately 4 to 12 hours.

The reaction mixture is then cooled under nitrogen to between 149°F (65°C) and 185°F (85°C). The crude reaction mixture is agitated with between 2 and 6 wt. percent water. The hydrated crude reaction mixture is passed through a centrifuge to separate a heavy and a light phase. The heavy phase which contains the soaps, excess sugars and potassium carbonate is discarded.

The light phase which contains methyl esters and the sucrose polyester is then dried to remove moisture at 176°F (80°C) under 70 mm Hg or less vacuum for 30 to 60 minutes. Filtrol 105 (1.0 wt. percent) is added and the mix is agitated at 167°F (75°C) to 185°F (85°C). The slurry is separated by filtration or other means until there is less than 0.1 wt. percent fines. The liquid is then passed through a 1 micromillimeter filter.

The refined and bleached reaction mix is then passed through a stainless steel wiped-film evaporator or other suitable equipment to distill off the bulk of the methyl esters. The distillation takes place at 392°F (200°C) to 455°F (235°C) under approximately 3 mm Hg of vacuum.

The sucrose polyester is then deodorized by passing downward through a stainless steel packed column deodorizer or other suitable device at 392°F (200°C) to 482°F (250°C) under a vacuum of about 5 mm Hg or less. Steam is introduced to the bottom of the column and passes counter-currently to the sucrose polyester. Feed rates and temperature are adjusted until the methyl ester content of the sucrose polyester is below 1000 ppm. The mixture is then cooled to between 149°F (65°C) to 185°F (85°C) and passed through a 1 micromillimeter filter. The sucrose polyester is stored in clean stainless steel drums.

Sucrose polyester made according to this procedure has the following composition and properties:

Fatty Acid Composition

| | |
|---|---|
| $C_{16}$ | 9.8% |
| $C_{16:1}$ | - |
| $C_{18}$ | 50.6 |
| $C_{18:1}$ | 21.6 |
| $C_{18:2}$ | 15.7 |
| $C_{18:3}$ | 1.0 |
| Others | 1.3 |
| Iodine Value | 48.6 |

Ester Distribution

| | |
|---|---|
| Octa | 89.1% |
| Hepta | 10.9 |
| Hexa | <0.1 |
| Penta | <0.1 |
| Lower | <0.1 |

SFC Profile

| | |
|---|---|
| 50°F (10° C) | 61.2% |
| 70°F (21° C) | 48.4 |
| 80°F (27° C) | 36.2 |
| 92°F (33° C) | 19.2 |
| 105°F (41°C) | 3.1 |
| 98.6°F (37°C) | 11.15 |
| 100°F (37.8°C) | about 10 |
| Viscosity | 25.9 poise |

After 10 min. steady shear at shear rate of 10 seconds$^{-1}$

| | |
|---|---|
| Liquid/Solid Stability | 92.5% |

Analytical Methods

I. Viscosity Measurement of the Polyol Fatty Acid Polyesters

A. Sample Preparation

The polyol polyester sample is heated until it completely melts and is thoroughly mixed. Ten grams of the melted sample is weighed into a preheated 20 ml glass vial. The sample is then allowed to recrystallize at 100°F ± 5°F (37.8°C ± 3°C) for 24 hours. After the 24 hour time period has elapsed, the sample is taken to the viscometer and the viscosity is measured.

B. Ferranti-Shirley Viscometer Operation Procedure

A Ferranti-Shirley viscometer (Ferranti Electric, Inc., 87 Modular Ave., Commack, NY 11725) equipped with a 600 g torque spring is used for the viscosity measurement. A cone is put into place, and the viscometer temperature is adjusted to 100°F (37.8°C). The chart recorder is calibrated, and the gap between the cone and plate is set. The cone speed is checked, and the cone and plate temperatures are equilibrated to 100°F (37.8°C). The panel controls are set. Sufficient sample is placed between the plate and the cone so that the gap is completely filled. The temperature is allowed to stabilize at 100°F (37.8°C) for about 30 seconds. Start the test by selecting the RPM for 10 seconds$^{-1}$ shear rate and record on the strip chart recorder. Record the shear stress at the maximum value for $t_0$ and then for two 30-second intervals, followed by every minute thereafter until the value at 10 minutes is recorded. Viscosity (poise) = Shear stress (dynes/cm$^2$) divided by shear rate (seconds$^{-1}$).

II. Liquid/Solid Stability Measurement of the Polyol Fatty Acid Polyesters

A sample is heated until it completely melts and is thoroughly mixed. The sample is then poured into Beckman #344062 4.4 ml tubes to capacity. The tubes are immediately transferred to a 100°F ± 5°F (37.8°C ± 3°C) constant temperature room and allowed to recrystallize undisturbed for 24 hours. The samples are then centrifuged at 60,000 rpm for one hour at 100°F (37.8°C). The force on the samples is 486,000 g's. The percent liquid separated is then measured by comparing the relative heights of the liquid and solid phases.

Liquid/solid stability (%) = 100 x (total volume of sample - volume of liquid that separated)/total volume of sample.

III. Solid Fat Content Measurement

Before determining SFC values, the polyol fatty acid polyester sample is heated to a temperature of 158°C (70°F) or higher for at least 0.5 hours or until the sample is completely melted. The melted sample is then tempered at a temperature of 40°F (4.4°C) for at least 72 hours. After tempering, the SFC value of the sample at a temperature of 100°F (37.8°C) is determined by pulsed nuclear magnetic resonance (PNMR). The method for determining SFC values by PNMR is described in Madison and Hill, J. Amer. Oil Chem. Soc., vol. 55 (1978), pp. 328-31 (herein incorporated by reference). Measurement of SFC by PNMR is also described in A.O.C.S. Official Method Cd. 16-81, Official Methods and Recommended Practices of The American Oil Chemists Society, 3rd Ed., 1987 (herein incorporated by reference).

The following examples are intended only to further illustrate the invention and are not intended to limit the scope of the invention which is defined by the claims.

EXAMPLE 1

Three varieties of granola bars are made from the following ingredients:

| Ingredients | Weight Percent | | |
|---|---|---|---|
| Liquid Binder | Raisin Nut | Chocolate Chip | Apple Cinnamon |
| *Sucrose fatty acid polyesters | 14.21 | 14.21 | 14.21 |
| Corn syrup (42 DE) | 16.26 | 16.26 | 16.22 |
| Granulated brown sugar | 10.66 | 10.66 | 10.63 |
| Water | 3.57 | 3.57 | 3.55 |
| Sorbitol (70% solution) | 1.69 | 1.69 | 1.73 |
| Glycerine (96% U.S.P.) | 1.24 | 1.24 | 1.29 |
| Lecithin | 0.22 | 0.22 | 0.22 |
| Salt | 0.13 | 0.13 | 0.13 |
| Vitamin E (d-alpha tocopherol acetate) | 0.02 | 0.02 | 0.02 |

*Prepared as described hereinabove at pp. 14-17.

| Dry Ingredients | | | |
|---|---|---|---|
| Rolled oats | 14.00 | 13.00 | 11.00 |
| Crisp rice | 14.00 | 13.00 | 12.00 |
| Raisins | 14.00 | 8.00 | 8.00 |
| Almonds | 10.00 | 7.00 | 8.00 |
| Chocolate chips | - | 11.00 | - |
| Dehydrated apples | - | - | 12.00 |
| Ground cinnamon | - | - | 1.00 |
| | 100.00 | 100.00 | 100.00 |

The liquid binder materials are mixed and heated to about 240°F (116°C). To obtain the desired consistency, heating is continued and moisture is allowed to boil off until the final solids content of the mixture is 80-85% by refractometer reading. A working temperature of approximately 165°F (74°C) is then maintained.

The dry ingredients are placed into a Hobart mixer and then the preheated liquid binder is added. These materials are blended at low speed for one minute.

The blended materials are then placed into the hopper of a Hutt/Bepex G.P. Forming System, 140-300 Series (Bepex Hutt GmbH, Postfach 9, Daimlerstrasse 9, D-7105, Leingarten, West Germany). The system is then warmed as needed to a working temperature of approximately 120°F (49°C). After forming, the granola bars are cooled to make the finished product. Baking is not required.

## EXAMPLE 2

Granola bars are made from the following ingredients:

| Ingredient | Amount |
|---|---|
| Toasted oats | 3-1/2 cups |
| Raisins | 1 cup |
| Chopped nuts | 1 cup |
| *Sucrose polyester shortening | 2/3 cup |
| Brown sugar | 1/2 cup |
| Honey | 1/3 cup |
| Egg, beaten | 1 |
| Vanilla | 1/2 teaspoon |
| Salt | 1/2 teaspoon |

*The shortening contains 58.5% liquid soybean oil (I.V. 107), 23.0% sucrose fatty acid polyesters prepared as described hereinabove at pp. 14-17, 10.0% sucrose fatty acid polyesters made from nearly completely hardened soybean oil methyl esters (I.V. 8), 4.5% mono- and diglyceride emulsifier, and 4.0% nearly completely hardened palm oil (I.V. 3).

The ingredients are combined and mixed well. The mixed ingredients are pressed firmly into a well greased 15-1/2 by 10-1/2 inch jelly roll pan, then baked at 350°F (177°C) for about 20 minutes. After baking, the mixture is allowed to cool, then cut into bars.

## Example 3

Popcorn balls are made from the following ingredients:

| Ingredient | Amount |
|---|---|
| *Sucrose fatty acid polyesters | 2/3 cup |
| Molasses | 2/3 cup |
| Corn syrup | 2/3 cup |
| Vinegar | 1 Tablespoon |
| Popped corn | 10 cups |

*Prepared as described hereinabove at pp. 14-17.

The sucrose polyesters, molasses, corn syrup and vinegar are combined and heated to about 250°F (121°C) to make a binder. The popped corn is placed into a large bowl. The binder is gradually poured into the center of the corn, and the corn is stirred with a fork and gathered, well coated with binder, into balls. The popcorn balls are pressed between the hands to pack hard.

## Example 4

Pecan clusters are made from the following ingredients:

| Ingredient | Amount |
|---|---|
| *Sucrose fatty acid polyesters | 1/2 cup |
| Flour | 1 cup |
| Finely chopped pecans | 1 cup |
| Sugar | 2 Tablespoons |
| Salt | 1/8 teaspoon |
| Vanilla extract | 1 teaspoon |
| Confectioner's sugar | -- |

*Prepared as described hereinabove at pp. 14-17.

The sucrose polyesters are melted, and then all the ingredients except the confectioners' sugar are combined in a large bowl. The ingredients are mixed until thoroughly blended, then refrigerated 30 minutes.

Meanwhile, an oven is preheated to 375°F (191°C). The ingredients are rolled by hand into balls 1-1/4 inches in diameter, and then placed 1 inch apart on ungreased cookie sheets.

The pecan clusters are baked 15 to 20 minutes, or until they are set but not brown. The clusters are left standing 1 minute before removing from cookie sheets, then removed to wire racks, and cooled slightly.

The pecan clusters are rolled in confectioners' sugar while still warm, then cooled completely. Just before serving, they are rerolled in sugar.

## Claims

1. A food product comprising edible food pieces held together by a binder, wherein the binder comprises from 5% to 100% reduced calorie fat substitute.

2. A food product according to Claim 1 selected from granola bars, popcorn balls, nut clusters, fruit bars, fruit and nut bars, rice crisp bars, and mixtures thereof.

3. A food product according to Claim 1, wherein the edible food pieces are selected from granola, popcorn, nuts, fruits, puffed rice, and mixtures thereof.

4. A food product according to any one of Claims 1-3 wherein the fat substitute is selected from sugar fatty acid polyesters, sugar alcohol fatty acid polyesters, glycerol fatty acid polyesters, polyglycerol fatty acid polyesters, fatty alcohol esters of polycarboxylic acids, fatty polyethers of polyglycerol, ethers and ether-esters of polyols containing the neopentyl moiety, fatty alcohol diesters of dicarboxylic acids, triglyceride esters of alpha branched chain-alkyl carboxylic acids, mixtures thereof, and mixtures thereof with particle engineered dextrins.

5. A food product according to Claim 4 wherein the fat substitute is a liquid polyol polyester.

6. A food product according to Claim 5 additionally comprising sufficient anti-anal leakage agent to prevent leakage of the liquid polyester through the anal sphincter.

7. A food product according to Claim 6 wherein the anti-anal leakage agent is a solid polyol fatty acid polyester.

8. A food product according to Claim 7 wherein the combined liquid and solid polyol polyester has a liquid/solid stability of at least 50%, preferably at least 60%.

9. A food product according to Claim 8 wherein the combined liquid and solid polyol polyester has a solid fat content of at least 5% at 37.8°C.

10. A food product according to any one of Claims 1-9 wherein the binder comprises from 5% to 50%, preferably from 5% to 33%, reduced calorie fat substitute.

11. A granola bar according to any one of Claims 2-10 comprising from 30% to 75%, preferably from 40% to 65%, by weight granola and from 25% to 70%, preferably from 35% to 60%, by weight binder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 236 288 (PROCTER & GAMBLE COMPANY) * abstract; page 13, line 29 – page 14, line 2; page 16, lines 17-22; claims 1-10 * | 1,3-5,7 | A 23 L 1/308 A 23 L 1/30 A 23 D 5/00 A 23 L 1/307 A 23 L 1/164 A 23 L 1/18 |
| A | JOURNAL OF THE AMERICAN OIL CHEMIST'S SOCIETY) vol. 63, no. 3, March 1986, pages 278-286; B.F. HAUMANN: "Getting the fat out" | 1,4 | |
| A | US-A-4 055 669 (R.G. KELLY et al.) * abstract; claims 1-3,5,10 * | 1,4 | |
| A | DE-A-3 401 682 (A. SENGEL) * claims 1,3; example * | 1 | |
| D,A | US-A-3 600 186 (F.H. MATTSON et al.) * claims 1-5 * | 1,4 | |

TECHNICAL FIELDS
SEARCHED (Int. Cl.4)

A 23 L 1/00
A 23 D 5/00

The present search report has been drawn up for all claims

| Place of search | Date of completion of the search | Examiner |
|---|---|---|
| BERLIN | 25-09-1989 | SCHULTZE D |

EPO FORM 1503 03.82 (P0401)